# EUROPEAN PATENT APPLICATION

(11) **EP 4 838 824 A1**
(43) Date of publication of application: **11.11.2026**
(21) Application number: 26173845.4
(22) Date of filing: 22.04.2026
(51) Int. Cl.: H04L 5/00

(54) **MONITORING OCCASION FOR REPEATED CORESET**

(30) Priority: 09.05.2025 WO PCT/CN2025/093959
(71) Applicant: Nokia Technologies Oy, 02610 Espoo (FI)
(72) Inventor: AHMADZADEH, Arman, Munich (DE); MARCONE, Alessio, Munich (DE); FREDERIKSEN, Frank, Klarup (DK); BI, Bo, Ulm (DE)
(74) Representative: Nokia EPO representatives

(57) **Abstract**

Example embodiments of the present disclosure are directed to monitoring occasion for repeated control resource set (CORESET). In a method, a first apparatus receives, from a second apparatus, a first configuration of a first CORESET. The first configuration indicates a duration of the first CORESET. The first apparatus receives, from the second apparatus, a second configuration of a search space set associated with the first CORESET. The first apparatus determines a first monitoring occasion for receiving a physical downlink control channel (PDCCH) within the first CORESET based on the first configuration and the second configuration. The first apparatus determines, based on at least one rule, a time resource for a second monitoring occasion for receiving the PDCCH within a repeated first CORESET.

## Description

### FIELD

Various example embodiments of the present disclosure generally relate to the field of telecommunication and in particular, to methods, devices, apparatuses and computer readable storage medium for monitoring occasion (MO) for repeated control resource set (CORESET).

### BACKGROUND

A communication network may serve as a facility that enables communication between two or more communication devices or provides communication devices access to a data network. A mobile or wireless communication network is one example of a communication network. A communication device may be provided with a service by an application server.

In the communication network, a network device may configure time-frequency resources for a terminal device such as user equipment (UE). For example, the network device may configure a CORESET for a physical downlink control channel (PDCCH). CORESET defines the time-frequency resources where a UE monitors and decodes PDCCH transmissions.

### SUMMARY

In a first aspect of the present disclosure, there is provided a first apparatus. The first apparatus comprises at least one processor; and at least one memory storing instructions that, when executed by the at least one processor, cause the first apparatus at least to: receive, from a second apparatus, a first configuration of a first CORESET, the first configuration indicating a duration of the first CORESET; and receive, from the second apparatus, a second configuration of a search space set associated with the first CORESET; determine a first monitoring occasion for receiving a PDCCH within the first CORESET based on the first configuration and the second configuration; and determine, based on at least one rule, a time resource for a second monitoring occasion for receiving the PDCCH within a repeated first CORESET.

In a second aspect of the present disclosure, there is provided a second apparatus. The second apparatus comprises at least one processor; and at least one memory storing instructions that, when executed by the at least one processor, cause the second apparatus at least to: transmit, to a first apparatus, a first configuration of a first CORESET, the first configuration indicating a duration of the first CORESET; transmit, to the first apparatus, a second configuration of a search space set associated with the first CORESET; determine a first monitoring occasion for transmitting a PDCCH within the first CORESET based on the first configuration and the second configuration; and determine, based on at least one rule, a time resource for a second monitoring occasion for a repeated transmission of the PDCCH within a repeated first CORESET.

In a third aspect of the present disclosure, there is provided a method. The method comprises: receiving, from a second apparatus, a first configuration of a first CORESET, the first configuration indicating a duration of the first CORESET; and receiving, from the second apparatus, a second configuration of a search space set associated with the first CORESET; determining a first monitoring occasion for receiving a PDCCH within the first CORESET based on the first configuration and the second configuration; and determining, based on at least one rule, a time resource for a second monitoring occasion for receiving the PDCCH within a repeated first CORESET.

In a fourth aspect of the present disclosure, there is provided a method. The method comprises: transmitting, to a first apparatus, a first configuration of a first CORESET, the first configuration indicating a duration of the first CORESET; transmitting, to the first apparatus, a second configuration of a search space set associated with the first CORESET; determining a first monitoring occasion for transmitting a PDCCH within the first CORESET based on the first configuration and the second configuration; and determining, based on at least one rule, a time resource for a second monitoring occasion for a repeated transmission of the PDCCH within a repeated first CORESET.

In a fifth aspect of the present disclosure, there is provided a first apparatus. The first apparatus comprises means for receiving, from a second apparatus, a first configuration of a first CORESET, the first configuration indicating a duration of the first CORESET; and means for receiving, from the second apparatus, a second configuration of a search space set associated with the first CORESET; means for determining a first monitoring occasion for receiving a PDCCH within the first CORESET based on the first configuration and the second configuration; and means for determining, based on at least one rule, a time resource for a second monitoring occasion for receiving the PDCCH within a repeated first CORESET.

In a sixth aspect of the present disclosure, there is provided a second apparatus. The second apparatus comprises means for transmitting, to a first apparatus, a first configuration of a first CORESET, the first configuration indicating a duration of the first CORESET; means for transmitting, to the first apparatus, a second configuration of a search space set associated with the first CORESET; means for determining a first monitoring occasion for transmitting a PDCCH within the first CORESET based on the first configuration and the second configuration; and means for determining, based on at least one rule, a time resource for a second monitoring occasion for a repeated transmission of the PDCCH within a repeated first CORESET.

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates an example signaling flow for MO determination for a repeated CORESET in accordance with some example embodiments of the present disclosure;
FIG. 3 illustrates an example diagram of UE autonomous determination of MO for repeated CORESET in accordance with some example embodiments of the present disclosure;
FIG. 4 illustrates another example diagram of UE autonomous determination of MO for repeated CORESET in accordance with some example embodiments of the present disclosure;
FIG. 5 illustrates another example signaling flow for MO determination for a repeated CORESET in accordance with some example embodiments of the present disclosure;
FIG. 6 illustrates a flowchart of a method implemented at a first apparatus in accordance with some example embodiments of the present disclosure;
FIG. 7 illustrates a flowchart of a method implemented at a second apparatus in accordance with some example embodiments of the present disclosure;
FIG. 8 illustrates a simplified block diagram of a device that is suitable for implementing example embodiments of the present disclosure; and
FIG. 9 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in analog, digital circuitry and/or quantum circuity) and
(b) combinations of hardware circuit(s) and software, such as (as applicable):
   (i) a combination of analog, digital and/or quantum hardware circuit(s) with software/firmware and
   (ii) any or all portions of hardware processor(s) (including digital and/or quantum processor(s)) with software, and memory(ies) that work together to cause an apparatus, such as a mobile device, computing device, or server, to perform various functions) and
(c) any or all portions of hardware circuit(s), such as a microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-loT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), an NTN device such as very small aperture terminal (VSAT), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

For coverage improvement of PDCCH CSS other than type0 and type3, i.e., Types 0A/1/2, an intra-slot PDCCH repetition will be considered. In an example (referred to as Option 1), a same CORESET and two different search space (SS) sets (SS Set 1 and SS Set 2) may be used. Two PDCCH candidates may be linked by a mechanism for SS linking specified in a predefined standard. The Option 1 uses the framework of linking two SS sets for multi-TRP operations, with the same CORESET used for linking the two SS sets.

As another example (referred to as Option 2), a same CORESET associated with one SS may be used. The CORESET may be repeated by introducing symbol domain offset X, X being an integer. That is, UE is configured with one SS set (in contrast to Option 1, wherein UE is configured with 2 SS sets), and instead the CORESET is repeated in the slot with an offset X (in unit of OFDM symbol) with respect to the first CORESET.

In practice, both Options 1 and 2 lead to the same effect, in terms of the number of resources consumed for transmission of control. Both options lead to transmitting the CORESET two times. Therefore, two options are different in terms of means of configuration. Additionally, Option 2 may have the advantage over Option 1 that UE is configured with one SS set (a single SS set, e.g. with only one SS set). Therefore, UE complexity is reduced in Option 2 as compared to Option 1. In some example embodiments of the present disclosure, the above Option 2 may be involved.

Physical uplink shared channel (PUSCH) is for transmitting in uplink and physical downlink shared channel (PDSCH) is for receiving in downlink. UE acquires the time-frequency resources for transmission and reception via downlink control information (DCI) that is carried via physical downlink control channel (PDCCH) prior to PUSCH transmission and PDSCH reception. However, no prior channel is transmitted for scheduling of PDCCH. Therefore, UE performs blind decoding (BD) attempts in an SS associated with a set of control resources called "CORESET" and in specific time-frequency locations (for example, PDCCH candidates) within the CORESET.

To have an efficient design for Option 2, it is beneficial to determine the time resources for monitoring of the repeated CORESET within a slot without ambiguity. Especially for cases where a UE may be configured with multiple monitoring occasions, it is important to provide a flexible (yet deterministic) set of rules for determining the offset between the original CORESET and the repeated CORESET to simplify the UE behavior when receiving PDCCH with repetitions.

A method for monitoring occasion (MO) determination for repeated CORESET is proposed. According to example embodiments, an apparatus such as UE receives, from a network device, a first configuration of a first CORESET and a second configuration of an SS set associated with the first CORESET. The first configuration indicates a duration of the first CORESET. The apparatus such as UE determines a first monitoring occasion for receiving a PDCCH within the first CORESET based on the first configuration and the second configuration. In addition, the apparatus such as UE determines, based on at least one rule, a time resource for a second monitoring occasion for receiving the PDCCH within a repeated first CORESET.

In this manner, the monitoring occasion for the repeated CORESET can be determined autonomously by UE. The UE determination of the repeated CORESET takes into account the existing configuration of monitoring occasions in a given slot. With these embodiments, it may ensure that the repeated CORESET is located in a symbol that is as close as possible to the original CORESET (which is repeated for coverage enhancements), while ensuring no overlap with other CORESETs and monitoring occasions.

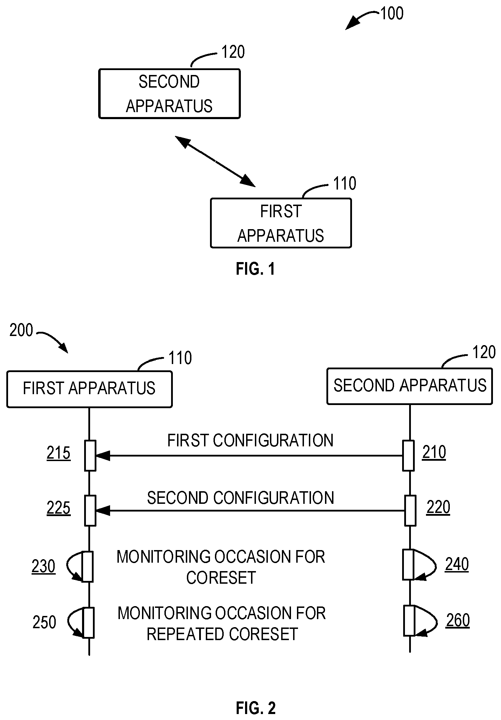

FIG. 1 illustrates an example communication environment 100 in which example embodiments of the present disclosure can be implemented. In the communication environment 100, a plurality of communication apparatuses, including a first apparatus 110 and a second apparatus 120, communicates with each other. In the example of FIG. 1, the first apparatus 110 may be a UE and the second apparatus 120 may be a base station serving the UE. The serving area of the second apparatus 120 may be called a cell (not shown).

In some example embodiments, if the first apparatus 110 is a terminal device and the second apparatus 120 is a network device serving the terminal device, a direction from the second apparatus 120 to the first apparatus 110 is referred to as a downlink (DL), while a direction from the first apparatus 110 to the second apparatus 120 is referred to as an uplink (UL). In DL, the second apparatus 120 is a transmitting (TX) device (or a transmitter) and the first apparatus 110 is a receiving (RX) device (or a receiver). In UL, the first apparatus 110 is a TX device (or a transmitter) and the second apparatus 120 is a RX device (or a receiver).

It is to be understood that the number of apparatuses and their connections shown in FIG. 1 are for the purpose of illustration. The communication environment 100 may include any suitable number of apparatuses configured to implement example embodiments of the present disclosure.

In the following, for the purpose of illustration, some example embodiments are described with the first apparatus 110 operating as a terminal device and the second apparatus 120 operating as a network device. However, in some example embodiments, operations described in connection with a terminal device may be implemented at a network device or other device, and operations described in connection with a network device may be implemented at a terminal device or other device.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

FIG. 2 illustrates an example signaling flow 200 for MO determination for a repeated CORESET in accordance with some example embodiments of the present disclosure. The signaling flow 200 involves the first apparatus 110 and the second apparatus 120 in FIG. 1.

The second apparatus 120 transmits (210), to the first apparatus 110, a first configuration of a first CORESET (also referred to as a CORESET configuration). Correspondingly, the first apparatus 110 receives (215) the first configuration. For example, the first configuration indicates a duration of the first CORESET. The duration of the first CORESET may be indicated by the number of contiguous orthogonal frequency-division multiplexing (OFDM) symbols.

In some examples, a CORESET such as the first CORESET may span over one, two, three, or any other suitable number of contiguous OFDM symbols over multiple resource blocks (RBs), where each RB consists of 12 subcarriers. In the frequency domain, a CORESET may span over one or multiple chunks of 6 RBs or other suitable number of RBs. A PDCCH candidate may be carried by 1, 2, 4, 8 or 16 control channel elements (CCEs), where the number of CCEs is defined by aggregation level (AL). Each CCE may be composed of 6 resource element groups (REGs), and each REG may be 12 resource elements (REs) in one OFDM symbol.

The first configuration may be included in an RRC message or any other suitable message or signaling. By way of example, an example of the first configuration is shown in Table 1 below. As shown, the information element (IE) or field "duration" in the first configuration indicates the duration of the first CORESET (that is, the number of contiguous OFDM symbols). The number of contiguous OFDM symbols are over multiple RBs which may be indicated by "frequencyDomainResources" in Table 1. It is to be understood that the example IEs, fields, values or formats shown in Table 1 are for the purpose of illustration. The first configuration may include more or less parameters for the first CORESET than shown in Table 1.

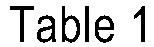

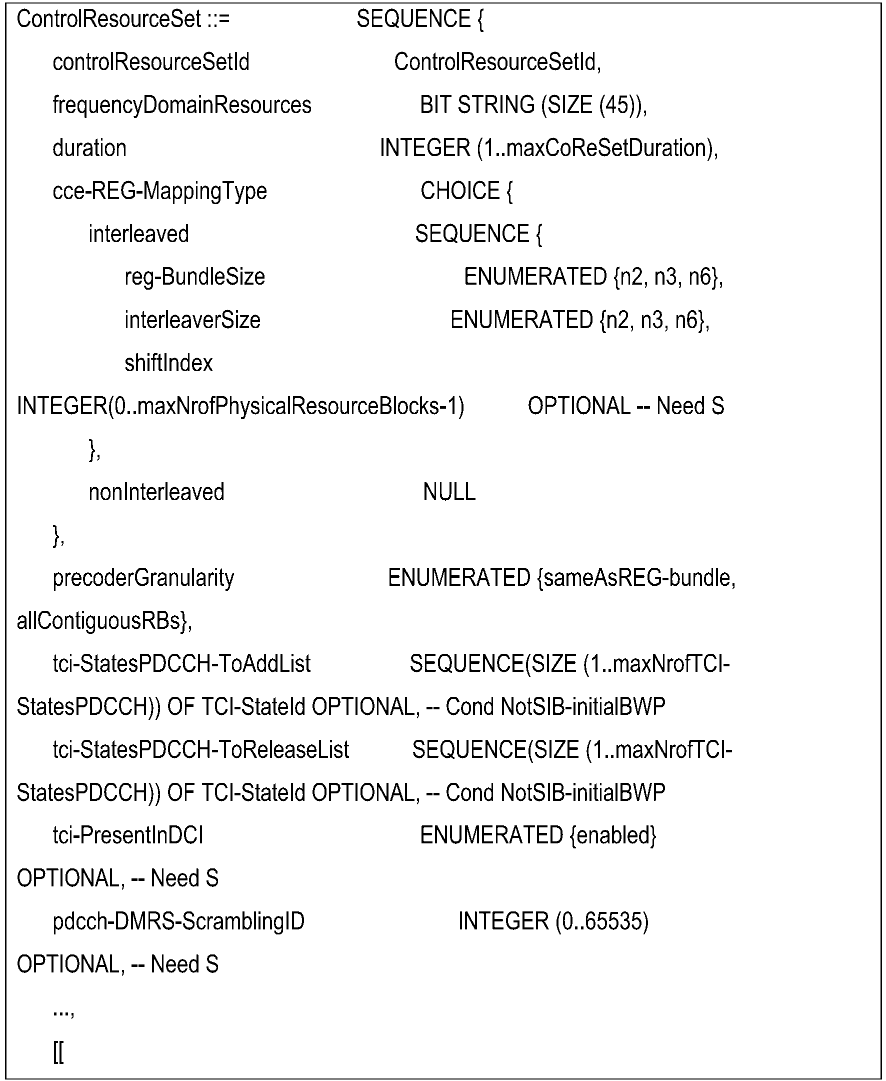

The second apparatus 120 transmits (220), to the first apparatus 110, a second configuration of a search space set (referred to as a first SS set) associated with the first CORESET. Correspondingly, the first apparatus 110 receives (225) the second configuration. The second configuration may be included in an RRC message or any other suitable message or signaling.

While the first configuration of the first CORESET provides configuration for frequency-domain resources and "duration" of the time-domain resources (e.g. only the duration of the time-domain resources), the exact MOs (in time), together with other configuration parameters, may be provided by the second configuration (that is, the SS set configuration). For example, the second configuration may inform the first apparatus 110 about at least one of: a periodicity (for example, in slot) of the SS set (denoted as "monitoringSlotPeriodicityAndOffset"), a duration (for example, in consecutive slots) of the SS set (denoted as "duration"), or symbols within a slot in which MOs exist (denoted as "monitoringSymbolsWithinSlot"). In addition, the second configuration may further indicate a type of SS set (denoted as "searchSpaceType") and the downlink control information (DCI) formats that the first apparatus 110 expects to monitor.

There may be several types of SS set. A first type of SS set may be a common SS (CSS) set, commonly monitored by a group of apparatuses such as UEs. A second type of SS set may be a UE-specific SS (USS), monitored by a specific UE. Within a search space configuration, various PDCCH monitoring parameters such as number of candidates (denoted as "nrofCandidates"), and possible number of CCEs (aggregation level) in each candidate may be set.

An example of the second configuration is shown in Table 2 below. It is to be understood that the example IEs, fields, values or format shown in Table 2 are for the purpose of illustration. The second configuration may include more or less parameters for the SS set.

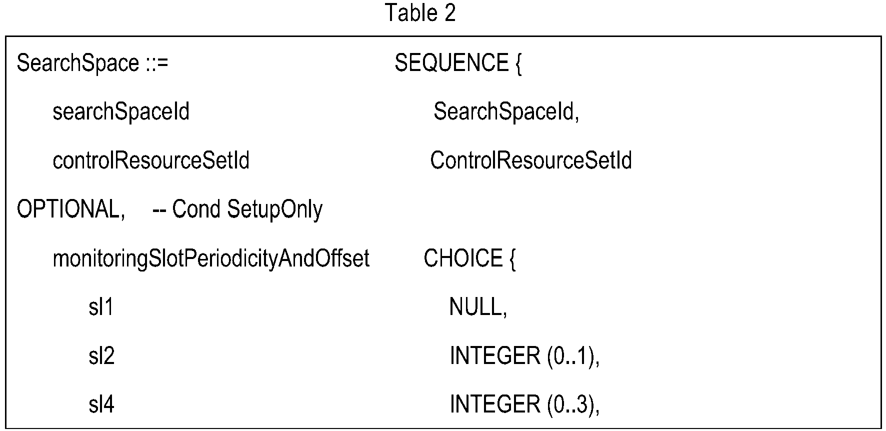

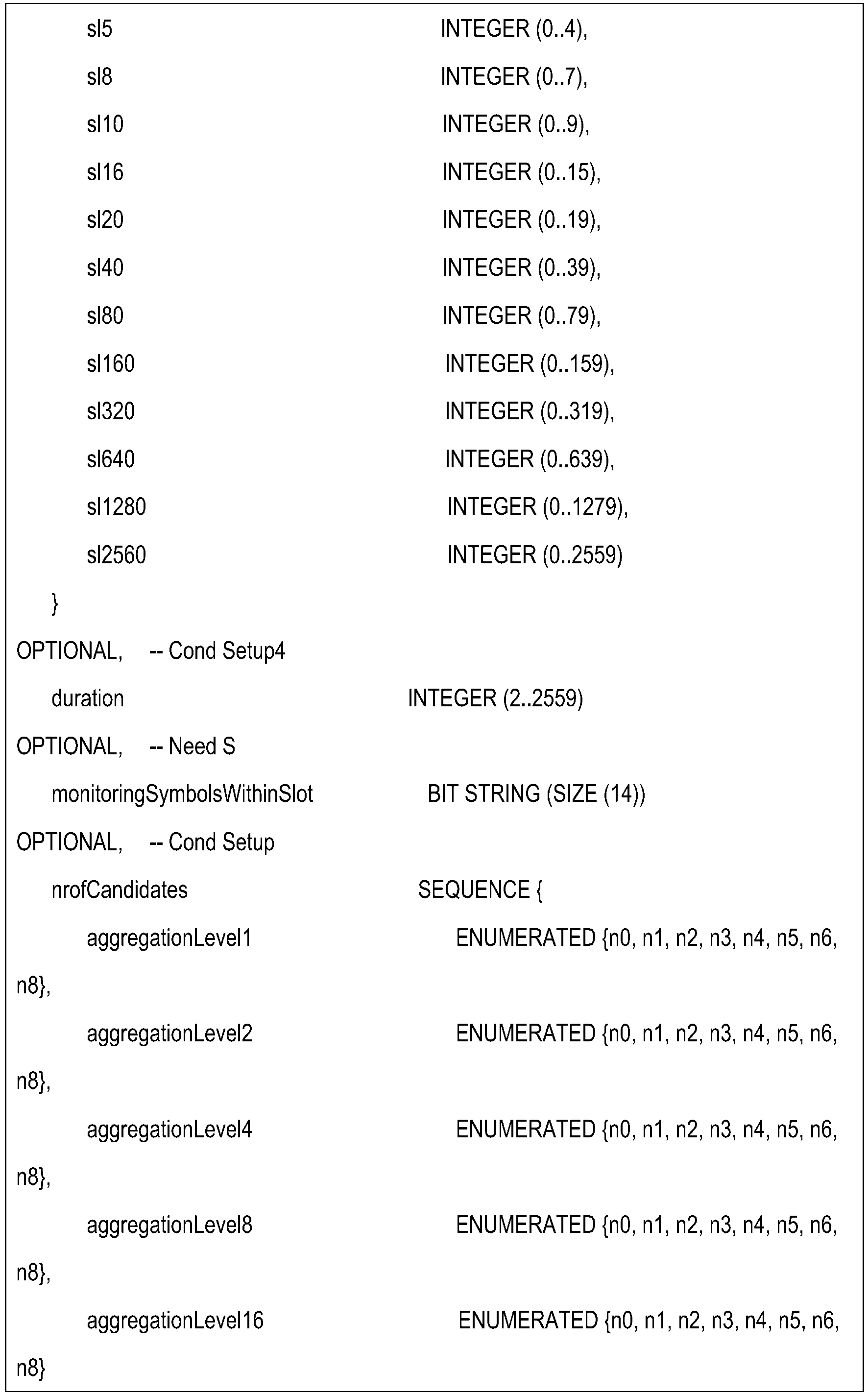

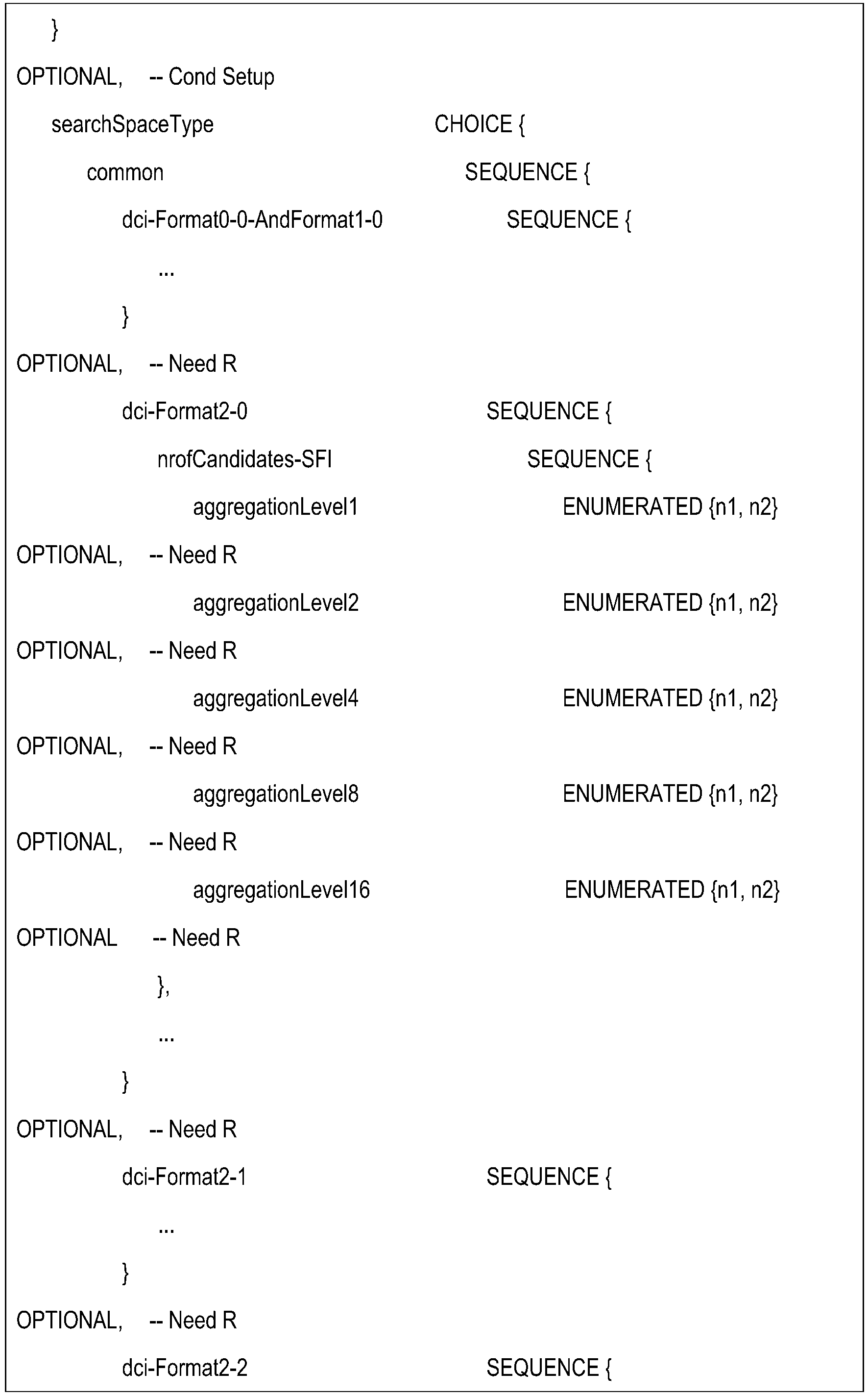

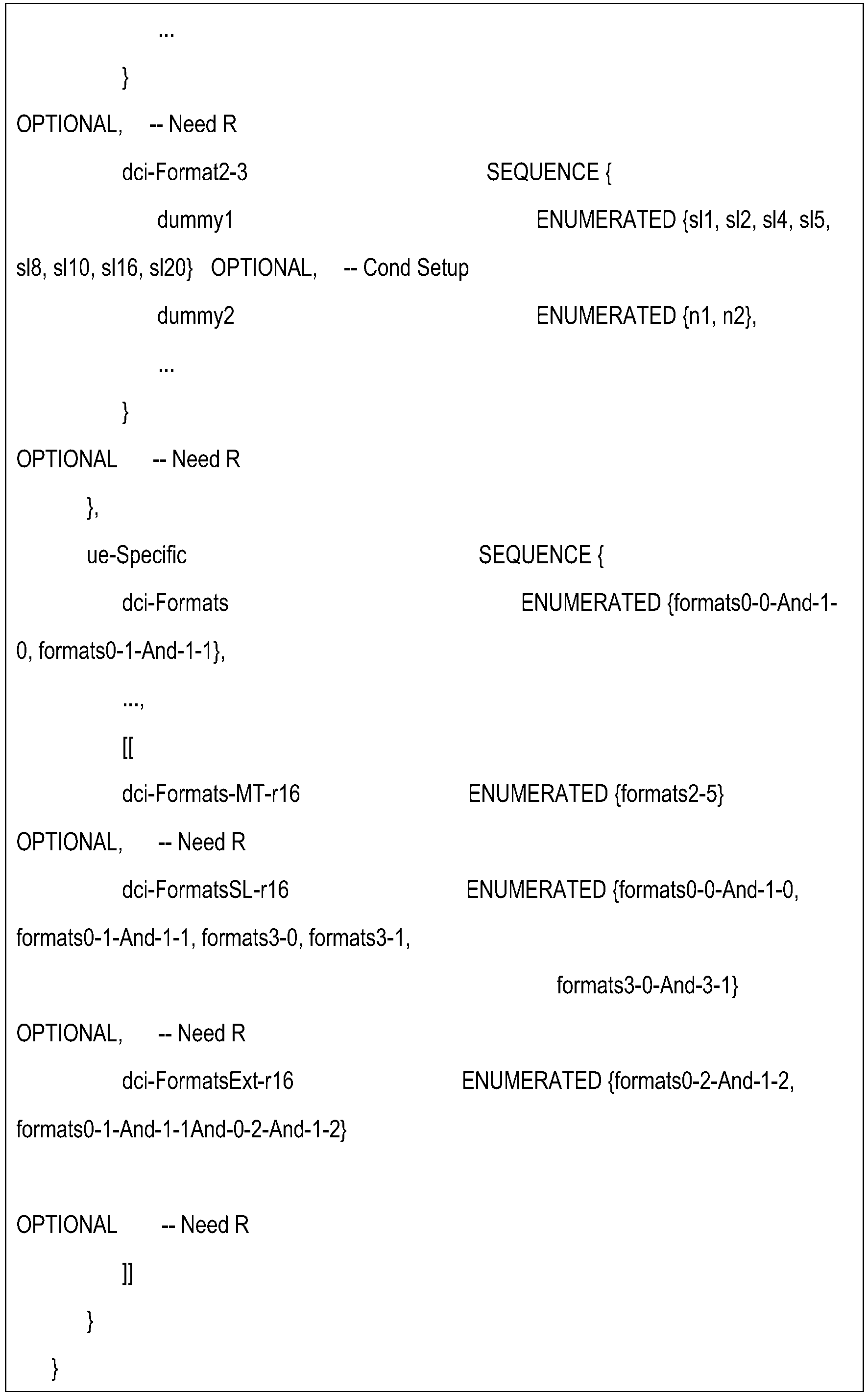

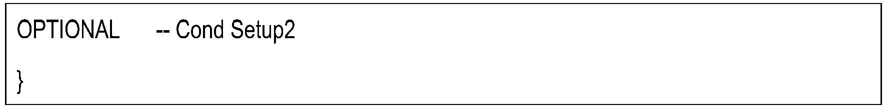

Several examples of the first and second configurations have been described. Based on the first and second configurations, the first apparatus 110 determines (230) a first MO for receiving a PDCCH within the first CORESET. For example, the first apparatus 110 may determine (230) the first MO based on the monitoringSymbolsWithinSlot, periodicity and offset in the second configuration and the duration in the first configuration. It is to be understood that the first apparatus 110 may determine one or more MOs for receiving PDCCH within the first CORESET based on the first and second configurations. Determining the first MO means that a time resource for the first MO is determined. Likewise, the second apparatus 120 determines (240) the first MO for transmitting the PDCCH within the first CORESET based on the first and second configurations. The determination of the first MO at the second apparatus 120 may be similar to that at the first apparatus 110, and will not be repeated here. In some examples, the second apparatus 120 may be aware of the first MO and may not need to determine the first MO based on the first and second configurations.

The first apparatus 110 determines (250), based on at least one rule, a time resource for a second MO for receiving the PDCCH within a repeated first CORESET. Likewise, the second apparatus 120 determines (260), based on the at least one rule, a time resource for the second MO for a repeated transmission of the PDCCH within the repeated first CORESET. As used herein, "determining a time resource for the second MO" may also be referred to as "determining the second MO". In this manner, the first apparatus 110 can autonomously determine the second MO based on the at least one rule instead of receiving a configuration (such as SS set configuration) informing of the second MO in time domain.

In some examples, a duration of the first CORESET in number of OFDM symbols may be the same as a duration of the repeated first CORESET in number of OFDM symbols. Repeating the CORESET in a same slot may increase the chance for successful decoding of the PDCCH by the first apparatus 110.

It is to be understood that there may be one or more second MOs repeated transmissions of PDCCH within the repeated first CORESET. In the following description, some example embodiments will be described with a single first MO and a single second MO for the purpose of discussion. Those embodiments may also be applied to a plurality of first MOs and/or a plurality of second MOs. The at least one rule for determining the second MO for repeated first CORESET may be same for the first apparatus 110 and the second apparatus 120. The at least one rule may be predefined or specified in a standard, pre-configured to the first apparatus 110, or may be configured by the second apparatus 120, or may be selected by the first apparatus 110 and indicated to the second apparatus 120.

In some examples, the second apparatus 120 may transmit, to the first apparatus 110, an indication for enabling PDCCH for at least one type of common search space set. The indication may be transmitted via DCI, medium access control control element (MAC CE), RRC message, or any other suitable signaling. In response to receiving the indication, the first apparatus 110 may determine (250), based on the at least one rule, the time resource for the second MO for receiving the PDCCH within the repeated first CORESET. The PDCCH may be associated with the at least one type of common search space set. The first apparatus 110 may monitor the PDCCH within the determined second MO. Alternatively, the first apparatus 110 may determine (250) the second MO based on the rule without receiving the indication for enabling PDCCH for at least one type of common search space set.

By way of example, the at least one type of common search space set may include a type 0A common search space set for system information other than system information block 1, a type 1 common search space set associated with a random access, a type 2 common search space set associated with a paging, and/or the like.

With these example embodiments, the first apparatus 110 such as UE can determine at least one time resource related to the MO for reception of a repeated transmission of a PDCCH CSS (Type 0A/1/2), by the second apparatus 120 such as network (NW) or gNB. The repeated PDCCH is transmitted within a repeated CORESET, and the determined MO is associated with the repeated CORESET. Additionally, the repeated CORESET has the same control resource size as the CORESET used for original or first transmission of the PDCCH. For example, the repeated CORESET and the first CORESET may be the same.

In this manner, the second MO is determined by the first apparatus 110 autonomously according to predetermined rules, without the need for explicit configuration or indication of an offset such as parameter "X" from NW or gNB. The first apparatus 110 determines the value of "X". For example, the first apparatus 110 determines the value of X autonomously. As used herein, X may refer to an offset between the original CORESET and the repeated CORESET, such as an offset from the last or ending OFDM symbol of the original CORESET to the initial or first OFDM symbol of the repeated CORESET.

In some example embodiments, the at least one rule may be based on the first MO, at least one further MO, at least one parameter indicated by the first configuration and/or the second configuration, and/or the like. The at least one further monitoring occasion may be associated with at least one second CORESET different from the first CORESET. For example, the first apparatus 120 may receive a further configuration of the at least one second CORESET. The further MO may be MO(s) for the at least one second CORESET. Alternatively, or in addition, the at least one further MO may be associated with at least one further search space set different from the first SS set configured by the second configuration. For example, a plurality of SS sets may be associated to a same CORESET such as the first CORESET, resulting in a plurality of first MOs. The at least one rule may be based on the plurality of MOs associated with the plurality of SS sets.

In an example, the first MO includes a first time resource in a slot. The at least one rule is based on the first MO. The first apparatus 110 may determine (250) the second MO to be a first available MO in the slot located after the first time resource associated with a transmission of the PDCCH within the first CORESET (referred to as a first PDCCH transmission). That is, the first apparatus 110 may determine (250) autonomously the second MO (for reception of repeated PDCCH), to be the first available MO after MO associated with first PDCCH transmission.

In another example, the first MO includes a first time resource in a slot. The at least one rule is based on the first MO and the at least one further MO. In one embodiment, the autonomous determination of the second MO may be based at least in part on other MOs, within a slot, that the first apparatus 110 determined as part of all search space configurations received by NW/gNB. For example, the first apparatus 110 may determine (250) the second MO to be located in a time resource after a latest monitoring occasion among the first MO and the at least one further MO in the slot. The first apparatus 110 may determine (250) autonomously the second MO (for reception of repeated PDCCH), as being located in time resources after latest MO in a slot associated to all other search spaces. This determination may focus on placing the MO for repeated PDCCH to be after all other MOs and ignores having the MO for repeated PDCCH occurs earlier in the slot, even if there is space or room for that.

In a further example, the at least one rule is based on the at least one parameter. Examples of the at least one parameter may include, but not limited to, a duration of the first CORESET (for example, "duration" in the first configuration), an identifier of the search space set (for example, "searchSpaceld" in the second configuration), a periodicity of the search space set (for example, "monitoringSlotPeriodicityAndOffset" in the second configuration), an offset of the search space set (for example, "monitoringSlotPeriodicityAndOffset" in the second configuration), a duration of the search space set (for example, "duration" in the second configuration), a location of a monitoring symbol within the slot (for example, "monitoringSymbolsWithinSlot" in the second configuration), and/or the like. The MO for repeated PDCCH, such as the value of X, may be determined by the first apparatus 110 based on a pre-defined rule in the specification. The rule may be associated with a search space configuration, for instance with an ID of a search space, and/or any other configuration parameters of the "SearchSpace IE", such as periodicity, offset, and duration of the search space.

By way of example, the at least one rule may be based on the location of the monitoring symbol within the slot such as "monitoringSymbolsWithinSlot". The first apparatus 110 may determine (250) an offset between the first CORESET and the repeated first CORESET based on the location of the monitoring symbol within the slot. The offset may be between the last symbol of the first CORESET and the initial symbol of the repeated first CORESET. The determination of the offset X may be based on a mapping between values of the monitoringSymbolsWithinSlot and values of X. Table 3 illustrates an example mapping. It is to be understood that the values and mapping relationships in Table 3 are for the purpose of illustration. Any suitable mapping between any suitable parameter and X may be predefined or configured.

**Table 3**

| Values of *monitoringSymbolsWithinSlot* | Value of X |
|---|---|
| *"monitoringSymbolsWithinSlot* = *[1000...]"* | X=0 |
| *"monitoringSymbolsWithinSlot* = *[0100...]"* | X=1 |
| *"monitoringSymbolsWithinSlot* = *[0010...]"* | X=2 |
| *"monitoringSymbolsWithinSlot* = *[0001...]"* | X=3 |

Several example embodiments regarding determining (250) the second MO for the repeated first CORESET at the first apparatus 110 have been described. It is to be understood that the second apparatus 120 may determine (260) the second MO for retransmitting the PDCCH in a similar way. Details of the determination of the second MO at the second apparatus 120 will not be repeated here.

By determining the second MO at the first apparatus 110 and at the second apparatus 120 in a similar way, the first apparatus 110 may know when to monitor the retransmission(s) of the PDCCH in a repeated CORESET.

In some example embodiments, the first apparatus 110 may determine whether at least one condition associated with the second monitoring occasion is satisfied. For example, the at least one condition may include a first condition that the second monitoring occasion crosses a slot boundary. For another example, the at least one condition may include a second condition that the second monitoring occasion overlaps with at least one further monitoring occasion or at least one further search space set. It is to be understood that there may be more or less conditions for the second MO. These conditions may be applied separately, or in any combination. If the at least one condition is satisfied, the first apparatus 110 may drop the second MO. Likewise, if the at least one condition is satisfied, the second apparatus 120 may refrain from retransmitting the PDCCH. That is, the repeated transmission of the PDCCH may not be performed.

In this manner, if the UE determination of the second MO for repeated PDCCH crosses slot boundary and/or UE cannot determine the second MO due to an overlap with other MOs associated with other SS sets, the UE may drop the second MO and do not expect to receive the repeated PDCCH. In addition, it ensures no overlap with other CORESETs and monitoring occasions.

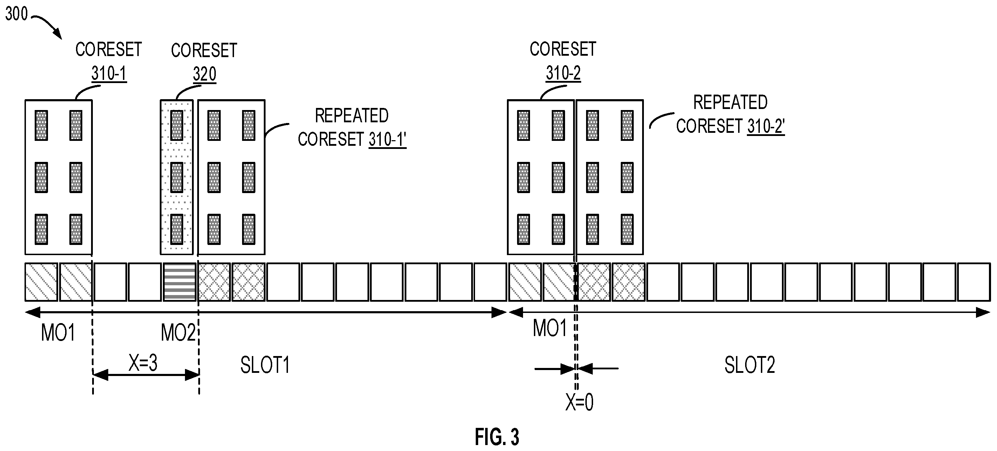

FIG. 3 illustrates an example diagram 300 of UE autonomous determination of MO for repeated CORESET in accordance with some example embodiments of the present disclosure. In the example of FIG. 3, the first apparatus 110 such as UE is configured with two SS sets, SS set1 associated with CORESET 310 (also referred to as first CORESET or CORESET1) and SS set2 associated with CORESET 320 (also referred to as second CORESET or CORESET2). The duration of the CORESET 310 may be of 2 OFDM symbols, and the duration of the CORESET 320 may be of 1 OFDM symbol).

The SS set1 has the periodicity of 1 slot and an offset of 0, while SS set2 has the periodicity of 2 slots and an offset of 0. The parameter "monitoringSymbolsWithinSlot" for SS set1 is [10000000000000], and the parameter "monitoringSymbolsWithinSlot" for SS sets is [00001000000000].

Based on such configurations, a CORESET 310-1 is in a first slot (Slot1) and a CORESET 310-2 is in a second slot (Slot2). A single CORESET 320 is included in Slot 1. The MO1 for the CORESET 310-1 is started from the first symbol in Slot1, and the MO2 for the CORESET 320 is from the fifth symbol in Slot 1. The MO1 for the CORESET 320-1 is from the first symbol in Slot2.

In such situation, the UE may determine the time resource(s) for an MO for reception of repeated PDCCH transmitted in a repeated CORESET 310-1' after the last MO in slot1 after MO2, and the time resource(s) for an MO for reception of repeated PDCCH transmitted in a repeated CORESET 310-2' in Slot2 after MO1. Therefore, UE autonomously determines the value of X=3 in Slot1, and X=0 in Slot2. The X is an offset between the original CORESET (310-1, 310-2) and the repeated CORESET (310-1', 310-2').

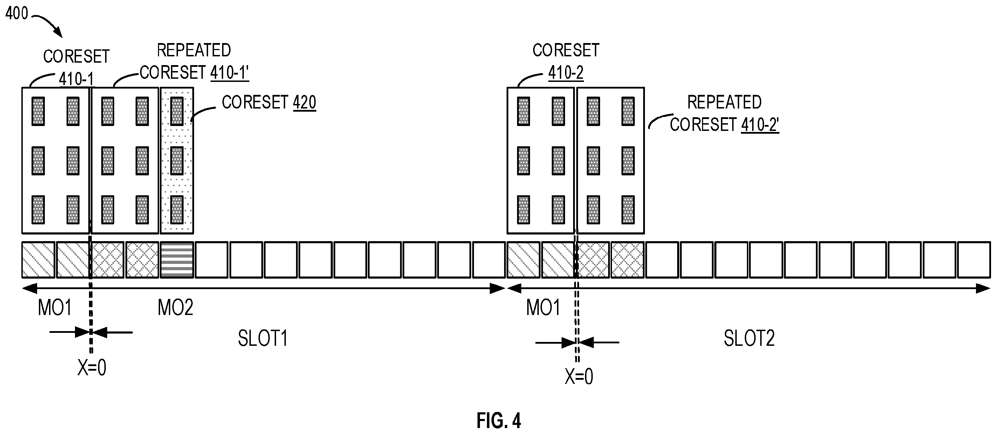

FIG. 4 illustrates another example diagram 400 of UE autonomous determination of MO for repeated CORESET in accordance with some example embodiments of the present disclosure.

Similar to the example of FIG. 3, in FIG. 4, the first apparatus 110 such as UE is configured with two SS sets, SS set1 associated with CORESET 410 (also referred to as first CORESET or CORESET1) and SS set2 associated with CORESET 420 (also referred to as second CORESET or CORESET2). The duration of the CORESET 410 may be of 2 OFDM symbols, and the duration of the CORESET 420 may be of 1 OFDM symbol).

The SS set1 has the periodicity of 1 slot and an offset of 0, while SS set2 has the periodicity of 2 slots and an offset of 0. The parameter "monitoringSymbolsWithinSlot" for SS set1 is [10000000000000], and the parameter "monitoringSymbolsWithinSlot" for SS sets is [00001000000000].

Based on such configurations, a CORESET 410-1 is in a first slot (Slot1) and a CORESET 410-2 is in a second slot (Slot2). A single CORESET 420 is included in Slot 1. The MO1 for the CORESET 410-1 is started from the first symbol in Slot1, and the MO2 for the CORESET 420 is from the fifth symbol in Slot 1. The MO1 for the CORESET 420-1 is from the first symbol in Slot2.

In the example of FIG. 4, the UE autonomously determines the time resources for MO associated with repeated PDCCH transmitted in repeated CORESET immediately after MO1 in Slo1, since time resources are available. As shown, the repeated CORESET 410-1' is from the third symbol in Slot1, and the repeated CORESET 410-2' is from the third symbol in Slot2. Therefore, UE autonomously determines the value of X=0 in Slot1, and X=0 in Slot2. The X is an offset between the original CORESET (410-1, 410-2) and the repeated CORESET (410-1', 410-2').

It is to be understood that these examples for UE autonomously determining the MO for repeated PDCCH in repeated CORESET shown in FIG. 3 and FIG. 4 are for the purpose of discussion. The values, parameters, MOs shown in FIG. 3 and FIG. 4 may be varied.

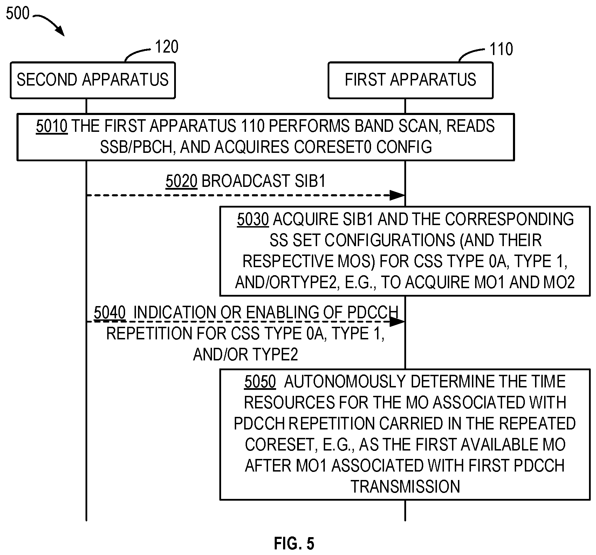

Further example embodiments will be described with respect to FIG. 5, which illustrates another example signaling flow 500 for MO determination for a repeated CORESET in accordance with some example embodiments of the present disclosure. The signaling flow 500 involves the first apparatus 110 and the second apparatus 120.

As shown, at 5010, the first apparatus 110 may perform a band scan, read synchronization signal block (SSB)/physical broadcast channel (PBCH), and acquire a configuration for a CORESET such as CORESET0. The configuration for CORESET0 may be similar to the configuration in Table 1, or may be any other suitable configuration.

At 5020, the second apparatus 120 such as NW may broadcast system information such as system information block 1 (SIB1). The first apparatus 110 may detect the SIB1.

At 5030, the first apparatus 110 may acquire the SIB1 and the corresponding SS set configuration(s) for CSS type 0A, type 1, type 2, and/or the like. The first apparatus 110 acquires respective MOs for the SS set(s) based on the SS set configuration(s). For example, the first apparatus 110 may determine MO1 for the CORESET0 and MO2 for a further CORESET.

At 5040, the second apparatus 120 may transmit an indication or enabling of PDCCH repetition for CSS type 0A, type 1 and/or type 2. The first apparatus 110 may thus be informed about the enabling.

At 5050, the first apparatus 110 autonomously determines the time resource(s) for the MO(s) associated with PDCCH carried in the repeated CORESET. For example, the time resource for the MO for the repeated CORESET may be a first available MO after MO1 associated with a first PDCCH transmission. Details of the determination of the time resource(s) for the MO(s) associated with PDCCH carried in the repeated CORESET may be similar to those example embodiments described with respect to FIG. 2 to FIG. 4, and will not be repeated here.

In this manner, the first apparatus 110 can determine the MO for the repeated CORESET by taking into account the existing configuration of monitoring occasions in a given slot. For example, the determined repeated CORESET may be located in a symbol that is as close as possible to the original CORESET.

Such MO determination for repeated CORESET may be applied for PDCCH transmission improvements. With such PDCCH transmission improvements, DL coverage enhancements may be achieved. For example, for NR NTN, such PDCCH transmission can be applied. Example embodiments of the present disclosure enhance coverage for PDCCH Type 0A/1/2 by repeating the CORESET within a single slot. This approach requires the UE to be configured with a single search space set, thereby reducing the complexity for the UE and the signaling needed (since additional SS configuration is not needed for the repeated CORESET).

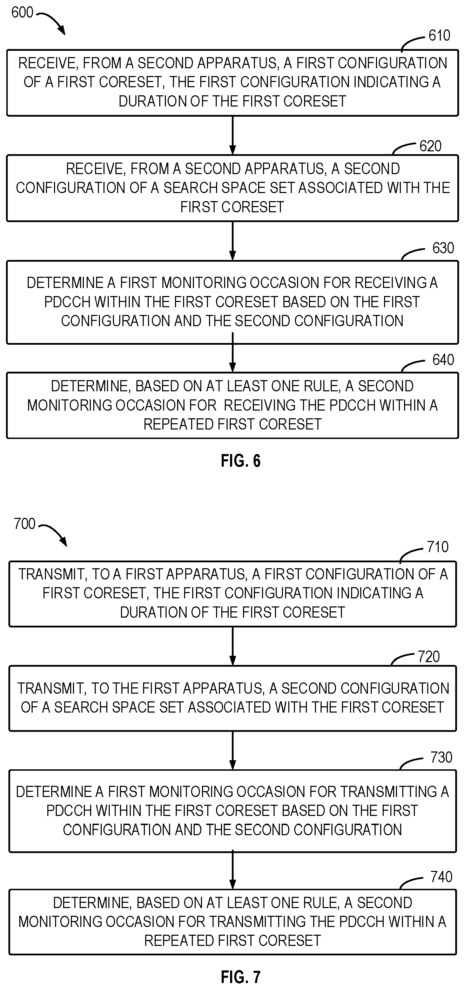

FIG. 6 shows a flowchart of an example method 600 implemented at a first apparatus in accordance with some example embodiments of the present disclosure. For the purpose of discussion, the method 600 will be described from the perspective of the first apparatus 110 in FIG. 1.

At block 610, the first apparatus 110 receives, from a second apparatus, a first configuration of a first CORESET, the first configuration indicating a duration of the first CORESET.

At block 620, the first apparatus 110 receives, from the second apparatus, a second configuration of a search space set associated with the first CORESET.

At block 630, the first apparatus 110 determines a first monitoring occasion for receiving a PDCCH within the first CORESET based on the first configuration and the second configuration.

At block 640, the first apparatus 110 determines, based on at least one rule, a time resource for a second monitoring occasion for receiving the PDCCH within a repeated first CORESET.

In some example embodiments, the at least one rule is based on at least one of: the first monitoring occasion, at least one further monitoring occasion associated with at least one second CORESET or at least one further search space set, or at least one parameter indicated by at least one of the first configuration or the second configuration.

In some example embodiments, the first monitoring occasion comprises a first time resource in a slot, the at least one rule is based on the first monitoring occasion. The first apparatus 110 may determine the second monitoring occasion to be a first available monitoring occasion in the slot located after the first time resource associated with a transmission of the PDCCH within the first CORESET.

In some example embodiments, the first monitoring occasion comprises a first time resource in a slot, the at least one rule is based on the first monitoring occasion and the at least one further monitoring occasion in the slot. The first apparatus 110 may determine the second monitoring occasion to be located in a time resource after a latest monitoring occasion among the first monitoring occasion and the at least one further monitoring occasion in the slot.

In some example embodiments, the at least one parameter indicated by at least one of the first configuration or the second configuration comprises at least one of: a duration of the control resource set; an identifier of the search space set; a periodicity of the search space set; an offset of the search space set; a duration of the search space set; or a location of a monitoring symbol within the slot.

In some example embodiments, the at least one rule is based on the location of the monitoring symbol within the slot. The first apparatus 110 may determine an offset between the first CORESET and the repeated first CORESET based on the location of the monitoring symbol within the slot.

In some example embodiments, the first apparatus 110 may determine whether at least one condition associated with the second monitoring occasion is satisfied; and in accordance with a determination that the at least one condition is satisfied, drop the second monitoring occasion. The at least one condition may include at least one of: a first condition that the second monitoring occasion crosses a slot boundary, or a second condition that the second monitoring occasion overlaps with at least one further monitoring occasion associated with at least one second CORESET or at least one further SS set.

In some example embodiments, a duration of the first CORESET in number of OFDM symbols is the same as a duration of the repeated first CORESET in number of OFDM symbols.

In some example embodiments, the PDCCH is associated with at least one of: a type 0A common search space set for system information other than system information block 1, a type 1 common search space set associated with a random access, or a type 2 common search space set associated with a paging.

In some example embodiments, the first apparatus 110 may receive, from the second apparatus, an indication for enabling PDCCH for at least one type of common search space set; in response to receiving the indication, determine, based on the at least one rule, the second monitoring occasion for receiving the PDCCH within the repeated first CORESET, the PDCCH being associated with the at least one type of common search space set; and monitor the PDCCH within the second monitoring occasion.

In some example embodiments, a first apparatus capable of performing any of the method 600 (for example, the first apparatus 110 in FIG. 1) may comprise means for performing the respective operations of the method 600. The means may be implemented in any suitable form. For example, the means may be implemented in a circuitry or software module. The first apparatus may be implemented as or included in the first apparatus 110 in FIG. 1.

FIG. 7 shows a flowchart of an example method 700 implemented at a second apparatus in accordance with some example embodiments of the present disclosure. For the purpose of discussion, the method 700 will be described from the perspective of the second apparatus 120 in FIG. 1.

At block 710, the second apparatus 120 transmits, to a first apparatus, a first configuration of a first CORESET, the first configuration indicating a duration of the first CORESET.

At block 720, the second apparatus 120 transmits, to the first apparatus, a second configuration of a search space set associated with the first CORESET.

At block 730, the second apparatus 120 determines a first monitoring occasion for transmitting a PDCCH within the first CORESET based on the first configuration and the second configuration.

At block 740, the second apparatus 120 determines, based on at least one rule, a time resource for a second monitoring occasion for a repeated transmission of the PDCCH within a repeated first CORESET.

In some example embodiments, the at least one rule is based on at least one of: the first monitoring occasion, at least one further monitoring occasion for PDCCH transmission associated with at least one second CORESET or at least one further search space set, or at least one parameter indicated by at least one of the first configuration or the second configuration.

In some example embodiments, the first monitoring occasion comprises a first time resource in a slot, the at least one rule is based on the first monitoring occasion. The second apparatus 120 may determine the second monitoring occasion to be an available occasion in the slot located after the first time resource.

In some example embodiments, the first monitoring occasion comprises a first time resource in a slot, the at least one rule is based on the first monitoring occasion and the at least one further monitoring occasion in the slot. The second apparatus 120 may determine the second monitoring occasion to be located in a time resource after a latest monitoring occasion of the first monitoring occasion and the at least one further monitoring occasion in the first slot.

In some example embodiments, the at least one parameter indicated by at least one of the first configuration or the second configuration comprises at least one of: a duration of the control resource set; an identifier of the search space set; a periodicity of the search space set; an offset of the search space set; a duration of the search space set; or a location of a monitoring symbol within the slot.

In some example embodiments, the at least one rule is based on the location of the monitoring symbol within the slot, and the second apparatus 120 may determine an offset between the first CORESET and the repeated first CORESET based on the location of the monitoring symbol within the at slot.

In some example embodiments, the second apparatus 120 may determine whether at least one condition associated with the second monitoring occasion is satisfied; and in accordance with a determination that the at least one condition is satisfied, refrain from transmitting the repeated PDCCH. The at least one condition comprises at least one of: a first condition that the second monitoring occasion crosses a slot boundary, or a second condition that the second monitoring occasion overlaps with at least one further monitoring occasion associated with at least one second CORESET or at least one further SS set.

In some example embodiments, the method 700 further comprising: transmitting, to the first apparatus, an indication for enabling PDCCH for at least one type of common search space set.

In some example embodiments, a second apparatus capable of performing any of the method 700 (for example, the second apparatus 120 in FIG. 1) may comprise means for performing the respective operations of the method 700. The means may be implemented in any suitable form. For example, the means may be implemented in a circuitry or software module. The second apparatus may be implemented as or included in the second apparatus 120 in FIG. 1.

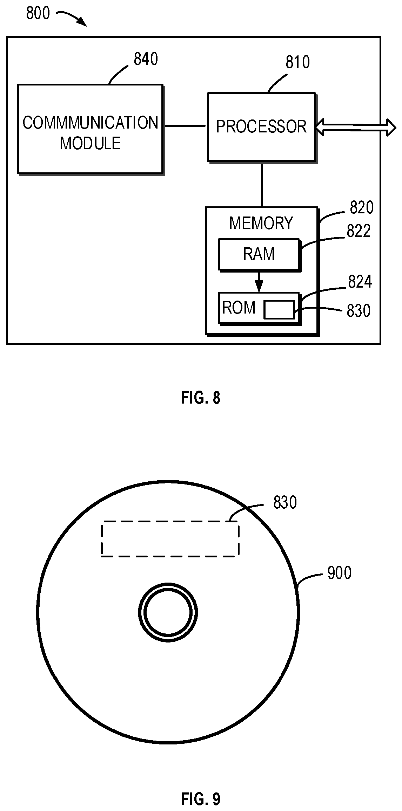

FIG. 8 is a simplified block diagram of a device 800 that is suitable for implementing example embodiments of the present disclosure. The device 800 may be provided to implement a communication device, for example, the first apparatus 110 or the second apparatus 120 as shown in FIG. 1. As shown, the device 800 includes one or more processors 810, one or more memories 820 coupled to the processor 810, and one or more communication modules 840 coupled to the processor 810.

The communication module 840 is for bidirectional communications. The communication module 840 has one or more communication interfaces to facilitate communication with one or more other modules or devices. The communication interfaces may represent any interface that is necessary for communication with other network elements. In some example embodiments, the communication module 840 may include at least one antenna.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a Read Only Memory (ROM) 824, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 822 and other volatile memories that will not last in the power-down duration.

A computer program 830 includes computer executable instructions that are executed by the associated processor 810. The instructions of the program 830 may include instructions for performing operations/acts of some example embodiments of the present disclosure. The program 830 may be stored in the memory, e.g., the ROM 824. The processor 810 may perform any suitable actions and processing by loading the program 830 into the RAM 822.

The example embodiments of the present disclosure may be implemented by means of the program 830 so that the device 800 may perform any process of the disclosure as discussed with reference to FIG. 2 to FIG. 7. The example embodiments of the present disclosure may also be implemented by hardware or by a combination of software and hardware.

In some example embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 9 shows an example of the computer readable medium 900 which may be in form of CD, DVD or other optical storage disk. The computer readable medium 900 has the program 830 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus comprising:
at least one processor; and
at least one memory storing instructions that, when executed by the at least one processor, cause the first apparatus at least to:
receive, from a second apparatus, a first configuration of a first control resource set, CORESET, the first configuration indicating a duration of the first CORESET;
receive, from the second apparatus, a second configuration of a search space set associated with the first CORESET;
determine a first monitoring occasion for receiving a physical downlink control channel, PDCCH, within the first CORESET based on the first configuration and the second configuration; and
determine, based on at least one rule, a time resource for a second monitoring occasion for receiving the PDCCH within a repeated first CORESET.

2. The first apparatus of claim 1, wherein the at least one rule is based on at least one of:
the first monitoring occasion,
at least one further monitoring occasion associated with at least one second CORESET or at least one further search space set, or
at least one parameter indicated by at least one of: the first configuration or the second configuration.

3. The first apparatus of claim 2, wherein the first monitoring occasion comprises a first time resource in a slot, the at least one rule is based on the first monitoring occasion; and wherein the instructions, when executed by the at least one processor, further cause the first apparatus to:
determine the second monitoring occasion to be a first available monitoring occasion in the slot located after the first time resource associated with a transmission of the PDCCH within the first CORESET.

4. The first apparatus of claim 2, wherein the first monitoring occasion comprises a first time resource in a slot, the at least one rule is based on the first monitoring occasion and the at least one further monitoring occasion in the slot, and wherein the instructions, when executed by the at least one processor, further cause the first apparatus to:
determine the second monitoring occasion to be located in a time resource after a latest monitoring occasion among the first monitoring occasion and the at least one further monitoring occasion in the slot.

5. The first apparatus of claim 2, wherein the at least one parameter indicated by at least one of the first configuration or the second configuration comprises at least one of:
- a duration of the control resource set;
- an identifier of the search space set;
- a periodicity of the search space set;
- an offset of the search space set;
- a duration of the search space set; or
- a location of a monitoring symbol within the slot.

6. The first apparatus of claim 5, wherein the at least one rule is based on the location of the monitoring symbol within the slot, and wherein the instructions, when executed by the at least one processor, further cause the first apparatus to:
determine an offset between the first CORESET and the repeated first CORESET based on the location of the monitoring symbol within the slot.

7. The first apparatus of any of claims 1 to 6, wherein the instructions, when executed by the at least one processor, further cause the first apparatus to:
determine whether at least one condition associated with the second monitoring occasion is satisfied; and
in accordance with a determination that the at least one condition is satisfied, drop the second monitoring occasion,
wherein the at least one condition comprises at least one of:
a first condition that the second monitoring occasion crosses a slot boundary, or
a second condition that the second monitoring occasion overlaps with at least one further monitoring occasion associated with at least one second CORESET or at least one further search space set.

8. The first apparatus of any of claims 1 to 7, wherein a duration of the first CORESET in number of orthogonal frequency division multiplexing, OFDM, symbols is the same as a duration of the repeated first CORESET in number of OFDM symbols.

9. The first apparatus of any of claims 1 to 8, wherein the PDCCH is associated with at least one of:
a type 0A common search space set for system information other than system information block 1,
a type 1 common search space set associated with a random access, or
a type 2 common search space set associated with a paging.

10. The first apparatus of any of claims 1 to 9, wherein the instructions, when executed by the at least one processor, further cause the first apparatus to:
receive, from the second apparatus, an indication for enabling PDCCH for at least one type of common search space set;
in response to receiving the indication, determine, based on the at least one rule, the second monitoring occasion for receiving the PDCCH within the repeated first CORESET, the PDCCH being associated with the at least one type of common search space set; and
monitor the PDCCH within the second monitoring occasion.

11. The first apparatus of any of claims 1 to 10, wherein the first apparatus comprises a terminal device, and the second apparatus comprises a network device.

12. A second apparatus comprising:
at least one processor; and
at least one memory storing instructions that, when executed by the at least one processor, cause the second apparatus at least to:
transmit, to a first apparatus, a first configuration of a first control resource set, CORESET, the first configuration indicating a duration of the first CORESET;
transmit, to the first apparatus, a second configuration of a search space set associated with the first CORESET;
determine a first monitoring occasion for transmitting a physical downlink control channel, PDCCH, within the first CORESET based on the first configuration and the second configuration; and
determine, based on at least one rule, a time resource for a second monitoring occasion for a repeated transmission of the PDCCH within a repeated first CORESET.

13. A method comprising:
receiving, at a first apparatus from a second apparatus, a first configuration of a first control resource set, CORESET, the first configuration indicating a duration of the first CORESET;
receiving, from the second apparatus, a second configuration of a search space set associated with the first CORESET;
determining a first monitoring occasion for receiving a physical downlink control channel, PDCCH, within the first CORESET based on the first configuration and the second configuration; and
determining, based on at least one rule, a time resource for a second monitoring occasion for receiving the PDCCH within a repeated first CORESET.

14. A method comprising:
transmitting, at a second apparatus to a first apparatus, a first configuration of a first control resource set, CORESET, the first configuration indicating a duration of the first CORESET;
transmitting, to the first apparatus, a second configuration of a search space set associated with the first CORESET;
determining a first monitoring occasion for transmitting a physical downlink control channel, PDCCH, within the first CORESET based on the first configuration and the second configuration; and
determining, based on at least one rule, a time resource for a second monitoring occasion for a repeated transmission of the PDCCH within a repeated first CORESET.

15. A computer readable medium comprising instructions stored thereon for causing an apparatus at least to perform the method of claim 13 or the method of claim 14.
